# EUROPÄISCHE PATENTSCHRIFT

(11) **EP 2 559 571 B1**
(45) Veröffentlichungstag und Bekanntmachung des Hinweises auf die Patenterteilung: **03.09.2014**
(21) Anmeldenummer: 12191812.2
(22) Anmeldetag: 14.12.2009
(51) Int. Cl.: B60D 1/14, B62D 21/02, B60D 1/48

(54) **Modulare LKW-Rohrtraverse**
Modular lorry pivot bar
Traverse tubulaire modulaire pour camion

(43) Veröffentlichungstag der Anmeldung: 20.02.2013
(62) Teilanmeldung aus: 09179096.4
(73) Patentinhaber: Jost-Werke GmbH, 63263 Neu-Isenburg (DE)
(72) Erfinder: Szczepanek, Udo, 82223 Eichenau (DE); Schmidt, Dirk, 65553 Limburg an der Lahn (DE); Koetter, Stefan, 64546 Mörfelden-Walldorf (DE)
(74) Vertreter: Trossin, Hans-Jürgen

(56) Entgegenhaltungen:
- EP-A- 1 445 126
- WO-A-2009/108155
- DE-U- 6 608 416
- FR-A- 446 185
- GB-A- 433 642
- US-A- 2 470 237
- US-A- 2 719 733
- US-A- 2 745 681
- US-A- 3 510 146
- US-A- 5 378 006
- US-B1- 7 100 936

## Beschreibung

Die vorliegende Erfindung betrifft eine Lastkraftwagen-Traverse, insbesondere mit Anhängerkupplungsaufnahme, umfassend eine sich längs einer Tragrohrbaugruppen-Längsachse erstreckende Tragrohrbaugruppe mit wenigstens zwei Tragrohren sowie vorzugsweise umfassend eine an der Tragrohrbaugruppe vorgesehene Anhängerkupplungsaufnahme, welche dazu ausgebildet ist, eine Anhängerkupplung mit einer zur Tragrohrbaugruppen-Längsachse im Wesentlichen orthogonalen Kupplungs-Zugrichtung aufzunehmen, sowie ferner umfassend wenigstens eine Endbereichs-Befestigungsanordnung, welche einen ersten Befestigungsabschnitt zur Befestigung der Endbereichs-Befestigungsanordnung an einem Längsendbereich der Tragrohrbaugruppe und einen zweiten Befestigungsabschnitt zur Befestigung der Endbereichs-Befestigungsanordnung an einem Rahmen eines Lastkraftwagens aufweist.

Eine derartige Rohrtraverse ist beispielsweise in Figur 1 der EP 1 932 690 A, die auch den Oberbegriff des Anspruchs 1 beschreibt, gezeigt und in den Absätzen [0002] bis einschließlich [0006] dieser Druckschrift beschrieben.

Derartige Lastkraftwagen-, also LKW-Traversen sind zum Einbau zwischen LKW-Längsrahmenteilen ausgebildet, so dass sie sich in einem am LKW eingebauten Zustand in der Regel in Fahrzeugquerrichtung erstrecken. Dies bedeutet genauer, dass die Tragrohrbaugruppen-Längsachse der bekannten LKW-Rohrtraverse dann, wenn sie am LKW montiert ist, in Fahrzeugquerrichtung verläuft.

Nachteilig an im Wesentlichen allen LKW-Traversen, auch an den gattungsgemäßen LKW-Rohrtraversen ist, dass aufgrund von Unterschieden der Rahmenkonstruktion von LKWs unterschiedlicher Hersteller in der Regel LKW-Traversen für jede LKW-Baureihe gesondert angefertigt werden müssen.

Selbst innerhalb einer LKW-Baureihe treten jedoch noch so große Toleranzen am LKW-Rahmen auf, dass die LKW-Traverse in ihrer Länge, also in ihrer Erstreckungsabmessung in Fahrzeugquerrichtung, mit dem kürzest möglichen Maß hergestellt und eventuelle Maßunterschiede im Abstand zwischen den Anbringungsflächen der LKW-Traverse zur Anbringung an den LKW-Rahmenteilen einerseits und dem Abstand zwischen den zugeordneten Gegenanbringungsflächen der LKW-Rahmenteile andererseits bei der Montage durch Zwischenanordnung von Maßstücken zwischen den Anbringungsflächen und den jeweils zugeordneten Gegenanbringungsflächen ausgeglichen werden müssen.

Aufgabe der vorliegenden Erfindung ist es daher, die gattungsgemäße LKW-Traverse derart weiter zu bilden, dass sie mit besonders geringem Aufwand an einem LKW-Rahmen angebracht werden kann.

Diese Aufgabe wird erfindungsgemäß gelöst durch eine Lastkraftwagen-Traverse der gattungsgemäßen Art, bei welcher der erste Befestigungsabschnitt der Endbereichs-Befestigungsanordnung zum Klemmeingriff mit der Tragrohrbaugruppe ausgebildet ist.

Durch diese Maßnahme kann die LKW-Traverse mit Tragrohren ausgeliefert werden, von welchen nur sichergestellt sein muss, dass sie wenigstens die für den Einbau am LKW erforderliche Mindestlänge aufweisen. Vorteilhafterweise wird die LKW-Traverse mit Tragrohren mit einer gewissen Überlänge ausgeliefert.

Für den Traversenlieferant ist somit eine Bereitstellung von Traversen mit exaktem Längenmaß nicht erforderlich, was bereits die Herstellung der erfindungsgemäßen LKW-Traverse gegenüber den aus dem Stand der Technik bekannten Traversen verbilligt.

Durch den erfindungsgemäßen Klemmeingriff zwischen der Endbereichs-Befestigungsanordnung und der Tragrohrbaugruppe kann die Endbereichs-Befestigungsanordnung bei gelöstem Klemmeingriff von der Tragrohrbaugruppe abgenommen oder längs der Tragrohrbaugruppen-Längsachse verschoben werden. Die Tragrohre der Tragrohrbaugruppe können somit vor Ort beim LKW-Hersteller auf einfachste Weise auf die Einbaulänge des jeweiligen LKWs abgelängt, etwa abgesägt, werden. An dem so geschaffenen montagefertigen Längsendbereich der Tragrohrbaugruppe kann die Endbereichs-Befestigungsanordnung erneut in Klemmeingriff mit der Tragrohrbaugruppe gebracht werden.

Wählt man den ersten Befestigungsabschnitt mit ausreichender Länge, können selbst geringfügig zu kurze Tragrohre noch ohne weitere Maßnahmen sicher in Klemmeingriff genommenen und am LKW angebracht werden.

Die so gebildete und mit einfachen Mitteln an das genaue Einbaumaß des LKW-Rahmens angepasste Baugruppe aus Tragrohren, gegebenenfalls Anhängerkupplungsaufnahme, und Endbereichs-Befestigungsanordnung kann dann, ohne dass ein Montageausgleich durch Zwischenanordnung von Maßstücken wie im Stand der Technik erforderlich wäre, mit dem LKW-Rahmen durch geeignete Verbindungsmittel mit ausreichender Festigkeit verbunden werden.

Ein geeignetes Verbindungsmittel kann beispielsweise eine aus dem Stand der Technik bekannte und bewährte Verschraubung sein.

Nachzutragen ist, dass eine in der vorliegenden Anmeldung genannte Zugrichtung der Anhängerkupplung (Kupplungs-Zugrichtung), also die Richtung, in welcher bei Geradeausfahrt im Zugverbund aus Zugfahrzeug und Nachlauffahrzeug an der Kupplung eine Zugkraft wirkt, in dem an den LKW montierten Zustand der LKW-Traverse in der Regel mit der LKW-Längsachsenrichtung zusammenfällt. Der Durchschnittsfachmann, der einer LKW-Traverse sofort ansieht, wie diese im montierten Zustand am LKW angebracht ist, wird keinerlei Schwierigkeiten haben, auch an der unmontierten LKW-Traverse die Kupplungs-Zugrichtung zu erkennen. Jedenfalls dann nicht, wenn eine Anhängerkupplungsaufnahme bereits an die LKW-Traverse montiert ist.

Grundsätzlich können als Tragrohre beliebige Rohre mit geschlossenem Querschnitt verwendet werden. Beispielsweise können in einem einfachen Fall mit moderater mechanischer Belastung Tragrohre mit Kreisquerschnitt verwendet werden.

Für höher belastete LKW-Traversen ist es dagegen vorteilhaft, Tragrohre mit ovalem Querschnitt zu verwenden, wobei die lange Halbachse des Rohrquerschnitts vorzugsweise in Kupplungs-Zugrichtung weist und die kurze Halbachse des ovalen Rohrquerschnitts in einer sowohl zur Kupplungs-Zugrichtung als auch zur Tragrohrbaugruppen-Längsachse orthogonalen Richtung verläuft.

Wenngleich gemäß einer Weiterbildung der Erfindung daran gedacht sein kann, die Tragrohrbaugruppe aus Tragrohren mit unterschiedlichen Querschnitten zusammenzusetzen, so ist doch aus Gründen einer erleichterten Fertigung und Montage bevorzugt, die Tragrohrbaugruppe aus gleichartigen, insbesondere gleichen Tragrohren zu bilden.

Vorzugsweise weisen die Tragrohre zumindest in ihren Endbereichen, vorzugsweise jedoch über ihre gesamte Länge einen einheitlichen Querschnitt auf, um so den Klemmeingriff der Endbereichs-Befestigungsanordnung an beliebigen Stellen der Tragrohre zu ermöglichen. Erforderlichenfalls kann die Wanddicke oder/und die Gestalt, insbesondere Innengestalt, der Tragrohre über deren axiale Länge hinweg unterschiedlich sein. So können beispielsweise höher belastete Längsabschnitte von Tragrohren dicker als andere Abschnitte ausgebildet sein.

Genauer kann der Klemmeingriff zwischen der Endbereichs-Befestigungsanordnung und der Tragrohrbaugruppe vorzugsweise derart ausgestaltet sein, dass bei Betrachtung der Endbereichs-Befestigungsanordnung in einem an die Tragrohrbaugruppe montierten Zustand, der erste Befestigungsabschnitt einen in Richtung der Tragrohrbaugruppen-Längsachse verlaufenden Klemm-Abschnitt aufweist, welcher ein Tragrohr in einer zu einer Tragrohr-Längsachse orthogonalen Umfangsrichtung umgibt und in Klemmeingriff mit dem Tragrohr ist. Dann steht die Endbereichs-Befestigungsanordnung also in konkretem Klemmeingriff mit einem Tragrohr. Es soll jedoch nicht ausgeschlossen sein, dass eine Endbereichs-Befestigungsanordnung mit mehreren oder sogar allen Tragrohren der Tragrohrbaugruppe in Klemmeingriff ist oder in diesen gebracht werden kann.

Um möglichst über den gesamten Klemm-Abschnitt hinweg für eine gleichmäßige Klemmkrafteinleitung und damit eine hohe Verbindungskraft zwischen der Endbereichs-Befestigungsanordnung und der Tragrohrbaugruppe zu sorgen, kann weiter vorgesehen sein, dass bei Betrachtung der Endbereichs-Befestigungsanordnung in einem an die Tragrohrbaugruppe montierten Zustand, zwischen einer zu dem umgebenen Tragrohr weisenden Klemmfläche des ersten Befestigungsabschnitts und einer Außenfläche des Tragrohrs ein Ausgleichsteil vorgesehen ist. Bevorzugt ist dieses Ausgleichsteil aus einem elastischen Material gebildet, wie etwa einem Elastomer, insbesondere Gummi. Die Montage derartiger Ausgleichsteile kann dadurch vereinfacht sein, dass das Ausgleichsteil ringförmig ausgebildet ist und das Tragrohr in einer zur Tragrohr-Längsachse orthogonalen Umfangsrichtung umschließt.

Grundsätzlich kann gemäß einer Weiterbildung der vorliegenden Erfindung daran gedacht sein, dass der Klemm-Abschnitt einstückig schellenartig ausgebildet ist, also beispielsweise durch ein einseitig geschlitztes Rohr, vorzugsweise mit einem den Schlitz zwischen sich einfassenden Klemmflansch, wobei der Durchmesser des Klemm-Abschnitts im ungeklemmten Zustand größer ist als im geklemmten Zustand. Der Vorteil dieser Ausführungsform liegt in der geringen Anzahl von Bauteilen, welche zur Realisierung des Klemmabschnitts notwendig sind.

Große Klemmkräfte und damit eine besonders sichere Verbindung von Endbereichs-Befestigungsanordnung und Tragrohrbaugruppe sowie eine einfache Montage können jedoch dann erreicht werden, wenn die Endbereichs-Befestigungsanordnung mehrteilig ausgebildet ist. Dabei ist eine einfache Anbringung der Endbereichs-Befestigungsanordnung an der Tragrohrbaugruppe insbesondere dann möglich, wenn der Klemm-Abschnitt durch wenigstens zwei Endbereichs-Befestigungsanordnungsbauteile gebildet ist. Vorzugsweise sind die beiden Endbereichs-Befestigungsanordnungsbauteile im Wesentlichen baugleich, so dass stets nur eine Bauteilart wiederholt hergestellt werden muss, um beliebig viele Endbereichs-Befestigungsanordnungen zu bilden.

Dies ist beispielsweise dann möglich, wenn ein Endbereichs-Befestigungsanordnungsbauteil zu einer Symmetrieebene symmetrisch ist, welche, bei Betrachtung der Endbereichs-Befestigungsanordnung im an die Tragrohrbaugruppe montierten Zustand, die Tragrohrbaugruppen-Längsachse bzw. eine Tragrohr-Längsachse eines geklemmten Tragrohres enthält.

Zur Bereitstellung der Klemmkraft an der Endbereichs-Befestigungsanordnung kann vorgesehen sein, dass, bei Betrachtung der Endbereichs-Befestigungsanordnung im an die Tragrohrbaugruppe montierten Zustand, an der Endbereichs-Befestigungsanordnung wenigstens ein Klemmkraftmittel vorgesehen ist, welches auf die Endbereichs-Befestigungsanordnung eine Klemmkraft mit einer zur Tragrohr-Längsachse des umgebenen Tragrohres orthogonalen Klemmkraftkomponente ausübt. Dabei kann bei der oben genannten einstückigen schellenartigen Ausführungsform des Klemm-Abschnitts der Endbereichs-Befestigungsanordnung ein einziges Klemmkraftmittel ausreichen, etwa eine Klemmschraube, gegebenenfalls im Verbund mit einer Klemmmutter. Ein Klemmschraube und eine mit dieser im Schraubeingriff befindliche Klemmmutter sollen im Übrigen als ein Klemmkraftmittel im Sinne der vorliegenden Anmeldung angesehen werden.

Jedoch können zur Erhöhung der bereitgestellten Klemmkraft bereits bei der Endbereichs-Befestigungsanordnung mit einem einstückigen, schellenartigen Klemm-Abschnitt mehrere Klemmkraftmittel vorgesehen sein, um die erzielbare Klemmverbindung mit einer möglichst hohen Klemmkraft zu versehen.

Jedoch erhöht auch bei mehrteiligen Endbereichs-Befestigungsanordnungen die Anzahl der dort vorgesehen Klemmkraftmittel die erreichbare Klemmkraft. Dabei ist eine besonders vorteilhafte, weil gleichmäßige Klemmkrafteinleitung an mehrteiligen Endbereichs-Befestigungsanordnungen dann erreichbar, wenn eine Klemmfläche der Endbereichs-Befestigungsanordnungen, über welche hinweg der Klemm-Abschnitt mit dem Tragrohr in Klemmeingriff ist, zwischen den Wirklinien von je wenigstens einem Klemmkraftmittel gelegen ist. Vorzugsweise sind die Klemmkraftmittel derart angeordnet, dass die Wirklinien der von ihnen jeweils ausgehenden Kräfte in gleicher Zahl zu beiden Seiten der Klemmfläche verlaufen. Dann kann sichergestellt werden, dass zu beiden Seiten der Klemmfläche stets eine im Wesentlichen gleich große Gesamtklemmkraft wirkt, um die Tragrohranordnung oder ein Tragrohr zwischen den Endbereichs-Befestigungsanordnungsbauteilen in Klemmeingriff zu nehmen.

Zur Befestigung der Endbereichs-Befestigungsanordnung mit dem Fahrzeugrahmen kann vorgesehen sein, dass, bei Betrachtung der Endbereichs-Befestigungsanordnung im an die Tragrohrbaugruppe montierten Zustand, der zweite Befestigungsabschnitt wenigstens eine Durchgangsöffnung aufweist, welche durch einen Schraubenschaft oder Gewindestange oder dergleichen durchsetzbar oder durchsetzt ist. Dadurch kann die Endbereichs-Befestigungsanordnung und damit die LKW-Traverse mit einfachen Mitteln am Fahrzeugrahmen befestigt werden.

Eine besonders vorteilhafte Weiterbildung der vorliegenden Erfindung ergibt sich dadurch, dass die wenigstens eine Durchgangsöffnung in Richtung der Tragrohrbaugruppen-Längsachse verläuft. Dann kann die erfindungsgemäße LKW-Traverse nämlich mit äußerst geringem Platzbedarf zwischen Fahrzeugrahmenabschnitten angeordnet werden, welche eine zur Tragrohrbaugruppen-Längsachse orthogonale Anbringungsfläche aufweisen.

Eine besonders vorteilhafte, weil an beliebige Montagesituationen anpassbare und dennoch eine hohe Klemmkraftwirkung bereitstellende LKW-Traverse kann dadurch erhalten werden, dass an jedem Längsendbereich eines Tragrohrs der Tragrohrbaugruppe je eine Endbereichs-Befestigungsanordnung vorgesehen ist.

Das Prinzip der Befestigung durch Klemmeingriff kann vorteilhafterweise nicht nur für die Befestigung der Tragrohre mittels der Endbereichs-Befestigungsanordnung am Fahrzeugrahmen sondern auch für die Befestigung der Anhängerkupplungsaufnahme an der Tragrohrbaugruppe genutzt werden. Deshalb kann die Anhängerkupplungsaufnahme eine Aufnahme-Befestigungsanordnung aufweisen, welche mit der Tragrohrbaugruppe in Klemmeingriff ist oder in Klemmeingriff bringbar ist. Insbesondere kann vorgesehen sein, dass die Anhängerkupplungsaufnahme eine Aufnahme-Befestigungsanordnung aufweist, welche mit wenigstens einem Tragrohr, vorzugsweise mit einer Mehrzahl von Tragrohren, besonders bevorzugt mit allen Tragrohren der LKW-Traverse in Klemmeingriff ist oder in Klemmeingriff bringbar ist.

Dabei ist die Aufnahme-Befestigungsanordnung vorzugsweise mit einer Mehrzahl von im Wesentlichen parallelen Tragrohren in Klemmeingriff, da so auch Biegemomente um die Tragrohrbaugruppen-Längsachse abgestützt werden können.

Zur Erhöhung der Klemmkraft, welche von der Aufnahme-Befestigungsanordnung auf die Tragrohrbaugruppe ausübbar ist, kann vorgesehen sein, dass die Aufnahme-Befestigungsanordnung wenigstens zwei Klemmeingriffs-Abschnitte aufweist, von welchen jeder ein Tragrohr zur Herstellung des Klemmeingriffs umgibt. Grundsätzlich soll nicht ausgeschlossen sein, dass die wenigstens zwei Klemmeingriffs-Abschnitte mit ein und demselben Tragrohr in Klemmeingriff sind oder wenigstens bringbar sind. Zur Abstützung eines auf die Aufnahme-Befestigungsanordnung im Zugbetrieb wirkenden Dreh- bzw. Biegemoments um die Tragrohrbaugruppen-Längsachse ist vorzugsweise jedoch daran gedacht, dass wenigstens zwei Klemmeingriffs-Abschnitte der Aufnahme-Befestigungsanordnung unterschiedliche Tragrohre umgeben.

Für die Ausgestaltung des Klemmeingriffs zwischen einem Klemmeingriffs-Abschnitt der Aufnahme-Befestigungsanordnung, über welchen hinweg die Aufnahme-Befestigungsanordnung in Klemmeingriff mit der Tragrohrbaugruppe oder einem Tragrohr ist, gelten die oben ausgeführten vorteilhaften Weiterbildungen des Klemm-Abschnitts der Endbereichs-Befestigungsanordnung entsprechend. Daher sind alle in der vorliegenden Anmeldung zu Klemm-Abschnitt und Endbereichs-Befestigungsanordnung angegeben vorteilhaften Weiterbildungen auch als Weiterbildungen des Klemmeingriffs-Abschnitt und der Aufnahme-Befestigungsanordnung zu verstehen.

Somit kann auch der Klemmeingriffs-Abschnitt der Aufnahme-Befestigungsanordnung einstückig schellenartig als geschlitztes Rohr mit einem den Rohrschlitz einfassenden Klemmflansch ausgebildet sein, welcher durch ein Klemmkraftmittel unter Ausübung von Klemmkraft überbrückt wird.

Vorteilhafterweise ist jedoch auch der Klemmeingriffs-Abschnitt, vorzugsweise sind mehrere Klemmeingriffs-Abschnitte, besonders bevorzugt alle Klemmeingriffs-Abschnitte mehrteilig ausgebildet. Zur erleichterten Montage der Aufnahme-Befestigungsanordnung an der Tragrohrbaugruppe kann vorgesehen sein, dass eine zum Tragrohr hinweisende, das Tragrohr umgebende Klemmeingriffsfläche des wenigstens einen Klemmeingriffs-Abschnitts von wenigstens zwei gesondert voneinander ausgebildeten Klemmeingriffs-Abschnittsbauteilen gebildet ist.

Eine besonders einfache Montagesituation der Anhängerkupplungsaufnahme ergibt sich dabei dann, wenn wenigstens jeweils ein Klemmeingriffs-Abschnittsbauteil eines Klemmeingriffs-Abschnitts integral mit der Anhängerkupplungsaufnahme ausgebildet ist.

Diese Anhängerkupplungsaufnahme kann beispielsweise als Gussteil ausgebildet sein, so dass das jeweilige Klemmeingriffs-Abschnittsbauteil einfach einen Abschnitt der Anhängerkupplungsaufnahme bildet. So kann die Anhängerkupplungsaufnahme mit dem wenigstens einen einstückig daran ausgebildeten Klemmeingriffs-Abschnittsbauteil gießtechnisch hergestellt sein.

Wiederum kann zwischen dem Klemmeingriffs-Abschnitt, genauer der Klemmeingriffsfläche des Klemmeingriffs-Abschnitts und dem in Klemmeingriff genommenen Abschnitt eines Tragrohrs ein Ausgleichsteil, vorzugsweise aus Elastomer, vorgesehen sein. Bevorzugt ist dieses gemäß einer vorteilhaften Weiterbildung der vorliegenden Erfindung ringförmig ausgebildet und umschließt das jeweilige Tragrohr in einer zur Tragrohr-Längsachse orthogonalen Umfangsrichtung. Hierdurch wird ein besonders fester Klemmeingriff mit hohen Klemmkräften zwischen dem Klemmeingriffs-Abschnitt und dem jeweiligen Tragrohr erreicht.

Wie oben zur Endbereichs-Befestigungsanordnung bereits ausgeführt wurde, kann auch an der Aufnahme-Befestigungsanordnung wenigstens ein Klemmeingriffskraftmittel vorgesehen sein, welches auf die Aufnahme-Befestigungsanordnung eine Klemmeingriffskraft mit einer zur Tragrohr-Längsachse des umgebenen Tragrohres orthogonalen Klemmkraftkomponente ausübt, wobei vorzugsweise an dem wenigstens einen mehrteiligen Klemmeingriffs-Abschnitt wenigstens zwei Klemmkraftmittel vorgesehen sind, wobei weiter vorzugsweise die Klemmeingriffsfläche zwischen den Wirklinien von je wenigstens einem Klemmeingriffskraftmittel gelegen ist.

Grundsätzlich kann vorgesehen sein, dass die Anhängerkupplungsaufnahme eine Trägerbaugruppe, etwa ein Gerüst oder beliebiges Gestell, insbesondere rahmenartiges Gestell, umfasst, welches in einem Bereich mit der Aufnahme-Befestigungsanordnung an der Tragrohrbaugruppe anbringbar ist und welches in einem anderen Bereich, der mit Abstand von dem mit der Aufnahme-Befestigungsanordnung zusammenwirkenden einen Bereich vorgesehen ist, eine Anhängerkupplung aufnimmt oder zumindest zu deren Aufnahme ausgebildet ist. Dadurch können auch LKW-Traversen verwirklicht werden, bei welchen die Anhängerkupplung mit Abstand von der Tragrohrbaugruppe angeordnet ist, etwa als so genannte Halbunterbau- oder Unterbau-Anhängerkupplung. Derartige Unterbau-Anhängerkupplungen befinden sich, bei Betrachtung eines am LKW-montierten Zustands, mit Abstand von der LKW-Traverse zwischen dieser und der Fahrbahn.

Für Unterbau-Anhängerkupplungen oder Anhängerkupplungsaufnahmen, welche für die Aufnahme einer Unterbau-Anhängerkupplung ausgebildet sind, kann es in Weiterbildung der vorliegenden Erfindung vorteilhaft sein, wenn die LKW-Traverse zur Abstützung der aufgrund des Abstands der Anhängerkupplung von der LKW-Traverse erwarteten hohen Dreh- bzw. Biegemomente um die Tragrohrbaugruppen-Längsachse mehr als zwei, vorzugsweise genau drei, Tragrohre aufweist.

Besonders vorteilhaft, gerade bei der oben genannten Ausführungsform, bei welcher Klemmeingriffs-Abschnittsbauteile integral mit der Kupplungsaufnahme ausgebildet sind, kann die Anhängerkupplungsaufnahme einen Zugstangenlagerbock umfassen, welcher beispielsweise zur Aufnahme einer in Zugstangenlängsrichtung gefederten Anhängerkupplung geeignet ist. Dieser Zugstangenlagerblock kann vorzugsweise zwischen zwei Tragrohren der Tragrohrbaugruppe angeordnet sein, so dass die am Zugstangenlagerblock vorteilhafterweise integral ausgebildeten Klemmeingriffs-Abschnittsbauteile Abschnitte der oberen und unteren Wandung des Zugstangenlagerblock sein können.

Grundsätzlich soll jedoch die Anhängerkupplungsaufnahme nicht auf die Aufnahme von gefederten Anhängerkupplungen beschränkt sein, wenngleich dies bevorzugt ist. Auch die Aufnahme ungefederter Anhängerkupplungen an der Anhängerkupplungsaufnahme kann ohne weiteres realisiert werden.

Dann, wenn Klemmeingriffs-Abschnittsbauteile nicht integral mit der Anhängerkupplungsaufnahme ausgebildet sind, kann dennoch eine einfache Verbindung der Aufnahme-Befestigungsanordnung mit der Anhängerkupplungsaufnahme realisiert sein, wenn an der Aufnahme-Befestigungsanordnung ein Anbringungsabschnitt vorgesehen ist, welcher zur Anbringung der Aufnahme-Befestigungsanordnung an eine die Anhängerkupplungsaufnahme tragende Trägerbaugruppe ausgebildet ist, und hierzu wenigstens eine, vorzugsweise in Richtung der Tragrohrbaugruppen-Längsachse verlaufende, Anbringungs-Durchgangsöffnung aufweist, welche durch einen Schraubenschaft oder eine Gewindestange oder dergleichen durchsetzbar oder durchsetzt ist.

Somit kann die Aufnahme-Befestigungsanordnung an der Trägerbaugruppe in ähnlicher Weise befestigt werden, wie die Endbereichs-Befestigungsanordnung an den LKW-Rahmenteilen befestigt werden kann.

Ein weiterer Vorteil der erfindungsgemäßen LKW-Traverse liegt darin, dass diese mit einer vollständig montierten Anhängerkupplung ausgeliefert kann. Somit erhält der LKW-Hersteller bzw. -Veredeler die LKW-Traverse mit einer Anhängerkupplungsaufnahme, an welcher eine im Wesentlichen vollständig montierte Anhängerkupplung bereits aufgenommen ist. Der LKW-Hersteller bzw. -Veredeler braucht daher nur noch die LKW-Traverse auf das richtige Einbaumaß abzulängen und kann diese unmittelbar am LKW betriebsfertig anmontieren.

Darüber hinaus können über die hier dargestellte Klemmeingriffslösung an der erfindungsgemäßen LKW-Rohrtraverse auch weitere Aggregate durch Klemmhalter positionsvariabel angebracht werden, wie beispielsweise Druckluft-, Strom- oder allgemein Engergiezufuhranschlusshalterungen und Unterfahrschutz und dergleichen.

Obwohl die bevorzugte Klemmeingriffslösung der oben beschriebene das Tragrohr umgebende Klemmeingriff ist, soll die vorliegende Erfindung nicht auf diese Lösung beschränkt sein. Alternativ oder zusätzlich kann auch eine Klemmbackenanordnung verwendet werden, welche in einem Zwischenraum zwischen zwei oder mehr, im Wesentlichen vorzugsweise parallelen, Tragrohren anzubringen ist.

Die vorliegende Erfindung wird nachfolgend anhand der beiliegenden Figuren näher erläutert. Es stellt dar:
- Figur 1: eine Ansicht einer ersten Ausführungsform einer erfindungsgemäßen LKW-Rohrtraverse bei Betrachtung in Kupplungs-Zugrichtung,
- Figur 2: die LKW-Rohrtraverse von Figur 1 mit geringen Abwandlungen in Draufsicht, also in einer Blickrichtung orthogonal sowohl zur Kupplungs-Zugrichtung als auch zur Tragrohrbaugruppen-Längsachse,
- Figur 3: eine zweite Ausführungsform einer erfindungsgemäßen LKW-Rohrtraverse bei Betrachtung in Kupplungs-Zugrichtung,
- Figur 4: eine Draufsicht der LKW-Rohrtraverse von Figur 3 mit geringen Abwandlungen,
- Figur 5: eine Querschnittsansicht durch die LKW-Rohrtraverse der Figuren 3 und 4 entlang der Schnittachse V-V in Figur 3,
- Figur 6: eine der Querschnittsansicht von Figur 5 entsprechende Querschnittsansicht einer dritten Ausführungsform einer erfindungsgemäßen LKW-Rohrtraverse.

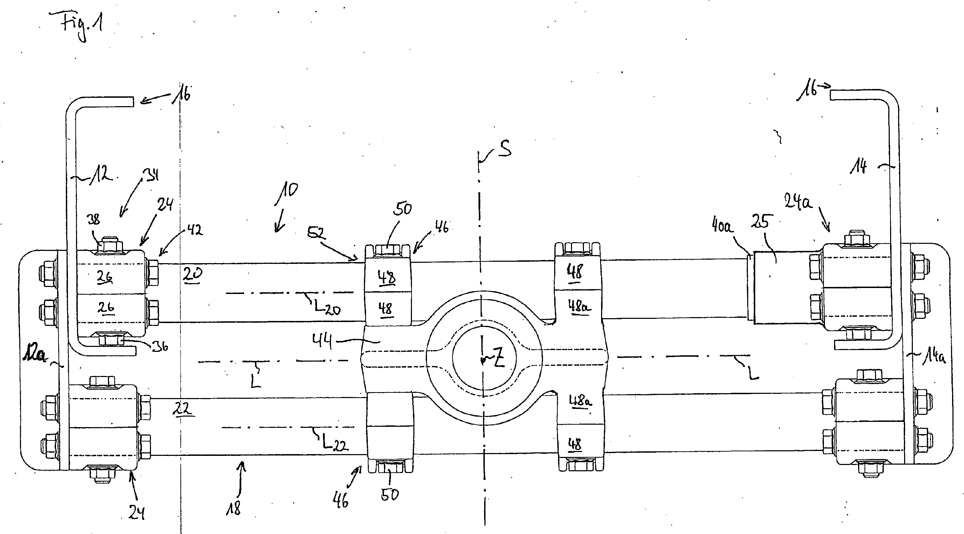

In Figur 1 ist eine erste Ausführungsform einer erfindungsgemäßen LKW-Traverse allgemein mit 10 bezeichnet.

Die LKW-Rohrtraverse 10 ist mit den seitlichen Rahmenträgern 12 bzw. 14 eines LKW-Rahmens 16 verbunden.

Die in Fahrzeugslängsrichtung orthogonal zur Zeichenebene der Figur 1 verlaufenden Rahmenträger 12 und 14 sind durch angeschraubte Hilfsrahmenträger 12a bzw. 14a erweitert.

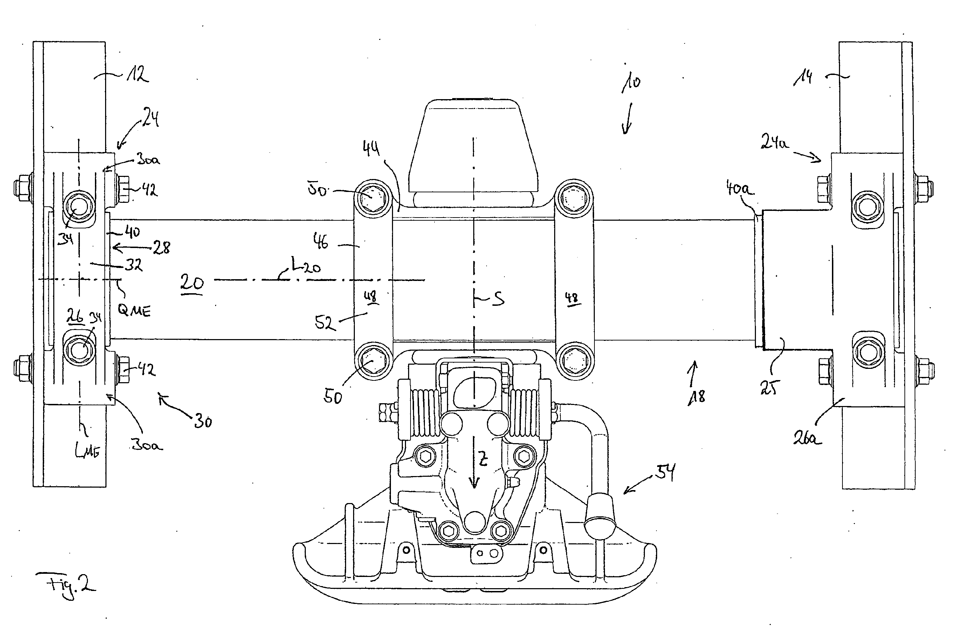

Die in einem an den LKW montierten Zustand in Fahrzeugquerrichtung verlaufende Rohrtraverse 10 ist vorzugsweise zu einer Symmetrieebene S symmetrisch, die orthogonal zur Längsachse L der Tragrohrbaugruppe 18 verläuft, welche in dem in den Figuren 1 und 2 dargestellten ersten Ausführungsbeispiel die Tragrohre 20 und 22 umfasst.

In der Figur 1 ist jedoch die Möglichkeit genutzt, auf der rechten Seite der Symmetrieebene S eine konstruktive Abwandlung der auf der linken Seite der Symmetrieebene S dargestellten erfindungsgemäßen LKW-Traverse zu zeigen.

Aufgrund dieser Symmetrie wird stellvertretend für die gesamte LKW-Traverse 10 im folgenden nur die in Figur 1 links von der Symmetrieebene S gelegene Hälfte der LKW-Traverse beschrieben, mit der Maßgabe, dass die in Figur 1 rechts von der Symmetrieebene S gelegene Hälfte der LKW-Rohrtraverse 10 nach Maßgabe der Symmetriebedingung spiegelbildlich zur Symmetrieachse S ausgeführt ist.

Sofern in der in Figur 1 auf der rechten Seite der Symmetrieebene S gelegenen Hälfte der dargestellten LKW-Traverse konstruktive Details von der gerade beschriebenen Symmetriebedingung abweichen, stellt diese Abweichung lediglich eine konstruktive Alternative zu der grundsätzlich beschriebenen LKW-Rohrtraverse dar.

Wie aus einer Zusammenschau der Figuren 1 und 2 hervorgeht, handelt es sich bei den Rohren 20 und 22 vorzugsweise um im Wesentlichen identische Rohre mit ovalem Querschnitt, wobei die lange Halbachse des Rohrquerschnitts in der zur Zeichenebene von Figur 1 orthogonalen Kupplungs-Zugrichtung Z verläuft, und die kurze Halbachse in einer zur Kupplungs-Zugrichtung Z und zur Tragrohrbaugruppen-Längsachse L orthogonalen Richtung verläuft.

Dadurch kann die in Richtung der Kupplungs-Zugrichtung Z verlaufende Zugkraft im Zugbetrieb eines Zugs aus Zugfahrzeug, an welchem die LKW-Traverse 10 in der Regel angebracht ist, und einem Nachlauffahrzeug, ohne nennenswerte Verformungen der LKW-Rohrtraverse von dieser aufgenommen werden.

Die Längsachsen L20 und L22 der einzelnen Tragrohre 20 bzw. 22 sind vorzugsweise zueinander sowie zur Tragrohrbaugruppen-Längsachse L parallel. Vorzugsweise ist an jedem Längsendbereich der Tragrohre 20 und 22 je eine Endbereichs-Befestigungsanordnung 24 vorgesehen.

Grundsätzlich kann daran gedacht sein, dass an den Längsendbereichen der einzelnen Tragrohre unterschiedliche Endbereichs-Befestigungsanordnungen vorgesehen sind, aus Gründen einer erleichterten Montage und auch Herstellung der Endbereichs-Befestigungsanordnungen 24 sind vorzugsweise jedoch an allen Tragrohren baugleiche Endbereichs-Befestigungsanordnungen 24 vorgesehen.

Stellvertretend für die übrigen Endbereichs-Befestigungsanordnungen wird nachfolgend lediglich jene des in den Figuren 1 und 2 linken Endbereichs des Tragrohres 20 beschrieben werden.

Die Endbereichs-Befestigungsanordnung 24 besteht vorteilhafterweise aus zwei identischen Bauteilen 26, die zur Erleichterung von Herstellung und Montage der Endbereichs-Befestigungsanordnungen vorzugsweise symmetrisch zu einer die Tragrohr-Längsachse L20 des zugeordneten Tragrohres 20 enthaltende Quermittelebene QME sind und vorteilhafterweise zusätzlich zu einer zur Quermittelebene QME orthogonalen Längsmittelebene LME symmetrisch sind.

Die beiden Endbereichs-Befestigungsanordnungsbauteile 26 einer Endbereichs-Befestigungsanordnung 24 bilden zwischen sich einen ersten Befestigungsabschnitt 28, mit welchem die Endbereichs-Befestigungsanordnung das zugeordnete Tragrohr, hier: Tragrohr 20, umgibt.

Zur Befestigung der Endbereichs-Befestigungsanordnung 24 am LKW-Rahmen 16, genauer an den Längsrahmenträgern 12 bzw. 14 weist die Endbereichs-Befestigungsanordnung 24, genauer jedes Endbereichs-Befestigungsanordnungsbauteil 26 einen zweiten Befestigungsabschnitt 30 auf, welcher auch eine Mehrzahl von, hier: zwei, Befestigungsteilabschnitten 30a umfassen kann.

Der erste Befestigungsabschnitt 28 der Endbereichs-Befestigungsanordnung 24 weist in dem in Figuren 1 und 2 dargestellten Ausführungsbeispiel also einen Klemm-Abschnitt 32 auf, der das Tragrohr 20 in einer zur Tragrohr-Längsachse L20 orthogonalen Umfangsrichtung umgibt und in Klemmeingriff mit dem Tragrohr 20 ist.

Zur Erzielung der gewünschten Klemmkraft weist die Endbereichs-Befestigungsanordnung 24 zu beiden Seiten des Tragrohres 20 je ein Klemmkraftmittel 34 auf, welches eine Klemmschraube 36 und eine Klemmmutter 38 umfasst. Vorzugsweise sind alle an einer LKW-Rohrtraverse verwendeten Klemmkraftmittel zur klemmenden Festlegung der Endbereichs-Befestigungsanordnung am Tragrohr im Wesentlichen identisch ausgebildet.

Zwischen dem Klemm-Abschnitt 32 der Endbereichs-Befestigungsanordnung 24 und dem Tragrohr 20 ist vorteilhafterweise ein Ausgleichsteil 40 aus einem Elastomer, vorzugsweise aus Gummi vorgesehen.

Die Befestigung der Endbereichs-Befestigungsanordnung an den Rahmenträgern 12 und 14 des LKW-Rahmens 16 im Bereich des zweiten Befestigungsabschnitts erfolgt vorzugsweise ebenfalls durch Verschraubungen, beispielsweise die Verschraubungen 42.

Für eine möglichst gleichmäßige Krafteinleitung weist jedes Endbereichs-Befestigungsanordnungsbauteil 26 vorzugsweise zu beiden Seiten des darin ausgebildeten Klemm-Abschnitts-Teilbereichs eine Aufnahme für eine Verschraubung auf. Dadurch kann zum einen die gesamte Endbereichs-Befestigungsanordnung 24 mit hoher Befestigungskraft am LKW-Rahmen 16 festgelegt werden, und kann andererseits jedes Endbereichs-Befestigungsanordnungsbauteil Montage erleichternd für sich alleine an den LKW-Rahmen angebaut werden.

Zur Aufnahme der Endbereichs-Befestigungsanordnungen 24 sind am LKW-Rahmen 16 entsprechende Durchgänge für die Verschraubungen 42 ausgebildet.

Die in dem in den Figuren 1 und 2 dargestellten Beispiel parallel zur Tragrohr-Längsachse L20 des zugeordneten Tragrohres 20 verlaufenden Durchgänge zur Aufnahme der Verschraubungen 42 sind üblicher Weise mit größerem Durchmesser als der Verschraubungsschaft ausgebildet, so dass die Anbringung der Verschraubungen 42 an den LKW-Rahmen 16 durch die Klemmkraft, die durch die Klemmkraftmittel 34 auf die Endbereichs-Befestigungsanordnungsbauteile 26 ausgeübt wird, nicht gestört wird.

Die Figur 1 zeigt darüber hinaus, dass die Verschraubungen 42 an der Endbereichs-Befestigungsanordnung 24 des Tragrohres 20 auch zur Anbringung der Hilfsrahmen 12a bzw. 14a verwendet werden, welche die Rahmenträger 12 und 14 zur Fahrbahn hin verlängern.

Die Endbereichs-Befestigungsanordnungen 24 des in Figur 1 unteren Tragrohres 22 ist nicht am Hauptrahmen 16, sondern an den Hilfsrahmen 12a bzw. 14a angebracht.

Dies muss jedoch nicht so sein, es kann, vielmehr wie in Figur 2 andeutet, auch daran gedacht sein, beide Tragrohre 20 und 22 an den LKW-Rahmenträgern 12 und 14 durch Verschraubungen 42 festzulegen. Voraussetzung hierfür ist, dass die Rahmenträger 12 bzw. 14 in Abstandsrichtung der Tragrohre 20 und 22 eine ausreichende Abmessung aufweisen und die Einbaulage der LKW-Traverse 10 in der durch die Rahmenträger 12 und 14 vorgegebenen Einbauhöhe gewünscht ist.

Der große Vorteil der erfindungsgemäßen LKW-Traverse liegt in ihrer einfachen Montierbarkeit an den LKW-Rahmen 16:
Da die Endbereichs-Befestigungsanordnungen aufgrund des vorgesehenen Klemmeingriffs stufenlos entlang der Tragrohrbaugruppen-Längsachse L verschiebbar und an den Tragrohren 20 und 22 festlegbar sind, können die Tragrohre 20 und 22 in einfachster Weise individuell ohne große Genauigkeit abgelängt und mit den Endbereichs-Befestigungsanordnungen 24 sicher am LKW-Rahmen 16 festgelegt werden.

So können die LKW-Traversen beispielsweise mit Tragrohren mit gewissem Übermaß an den LKW-Hersteller oder einen LKW-Veredeler geliefert und von diesem abgelängt und eingebaut werden.

Die LKW-Rohrtraverse 10 kann ferner eine Anhängerkupplungsaufnahme 44 aufweisen, beispielsweise in dem in den Figuren 1 und 2 dargestellten Beispiel als Zugstangen-Lagerblock.

Als Zugstangen-Lagerbock kann die Anhängerkupplungsaufnahme 44 vorzugsweise zwischen zwei Tragrohren 20 und 22 aufgenommen sein und an diesen wiederum durch Klemmeingriff gehaltert sein.

Hierzu kann die Anhängerkupplungsaufnahme Aufnahme-Befestigungsanordnungen 46 aufweisen. Vorzugsweise sind die an ein und derselben Anhängerkupplungsaufnahme 44 verwendeten Aufnahme-Befestigungsanordnungen 46 zur Erleichterung von deren Herstellung sowie zur Erleichterung der Montage der Anhängerkupplungsaufnahme baugleich.

Die Endbereichs-Befestigungsanordnung 46 kann wiederum aus zwei Endbereichs-Befestigungsanordnungsbauteilen 48 bestehen, welche wiederum vorzugsweise baugleich sind und hierzu, wie zuvor die Endbereichs-Befestigungsanordnung 24 und deren Bauteile 26, vorzugsweise zu einer Quermittelebene, besonders bevorzugt zusätzlich auch zu einer Längsmittelebene symmetrisch sind.

Die Aufnahme-Befestigungsanordnungen 46 weisen wiederum Klemmeingriffskraftmittel 50 auf, welche als Schrauben beispielsweise in ein Gewinde der zwischen den Tragrohren 20 und 22 aufgenommen Anhängerkupplungsaufnahme 44 eingedreht sein können.

Wiederum kann zwischen einem Klemmeingriffs-Abschnitt 52 der Aufnahme-Befestigungsanordnung 46, mit welchem diese das ihr zugeordnete Tragrohr umgibt und in Klemmeingriff hält, ein Ausgleichsteil, vorzugsweise aus Elastomer, wie etwa Gummi, angeordnet sein, wie dies mit dem Ausgleichsteil 40 auch beim Klemm-Abschnitt 32 der Endbereichs-Befestigungsanordnungen 24 der Fall ist.

In der Darstellung der LKW-Rohrtraverse 10 von Figur 1 ist in der rechten Hälfte bezüglich der Symmetrieebene S eine konstruktive Variante der Anhängerkupplungsaufnahme 44 gezeigt, bei welcher die anhängerkupplungsaufnahmenferneren Aufnahme-Befestigungsanordnungsbauteile 48 identisch mit den zuvor beschriebenen auf der linken Seite der Symmetrieebene S in Figur 1 ausgebildet sind, jedoch die jeweils zugehörigen anhängerkupplungsaufnahmennäheren Aufnahme-Befestigungsanordnungsbauteile als Aufnahme-Befestigungsabschnitte 48a einstückig mit der Anhängerkupplungsaufnahme 44 ausgebildet sind. Beispielsweise kann die in Figur 1 als Zugstangen-Lagerbock ausgebildete Anhängerkupplungsaufnahme 44 in an sich bekannter Weise gießtechnisch hergestellt sein.

Wiederum kann die Anhängerkupplungsaufnahme durch Lösen des Klemmeingriffs an den Aufnahme-Befestigungsanordnungen in Richtung der Trägerbaugruppen-Längsachse L verschoben werden, so dass stets sichergestellt sein kann, dass die Anhängerkupplungsaufnahme 44 unabhängig von der Art und Weise der Ablängung der Tragrohre 20 und 22 der Tragrohrbaugruppe 18 in der Längsmitte der Tragrohrbaugruppe 18 angeordnet sein kann.

Die Figur 2, welche im Wesentlichen die gleiche Ausführungsform zeigt wie die Figur 1, weicht von jener dadurch ab, dass die Anhängerkupplungsaufnahme 44 mit einer darin angeordneten Anhängerkupplung 54 dargestellt ist, mit welcher die LKW-Traverse 10 komplettiert vormontiert ausgeliefert werden kann.

Weiter sind in Figur 2 die Hilfsrahmen 12a und 14a weggelassen, so dass die LKW-Traverse 10 mit allen Endbereichs-Befestigungsanordnungen 24 an den LKW-Längsrahmenträgern 12 bzw 14 angeschraubt ist.

Schließlich unterscheiden sich die Ausgestaltungen der Aufnahme-Befestigungsanordnungsbauteile 48 geringfügig von der in Figur 1 dargestellten Variante, ohne dass dies Einfluss auf die Funktion der Aufnahme-Befestigungsanordnung 46 hätte.

Auf der rechten Seite von Figur 2 ist eine alternative Ausführungsform der Endbereichs-Befestigungsanordnung gezeigt und mit dem Bezugszeichen 24a bezeichnet.

An dieser modifizierten Endbereichs-Befestigungsanordnung 24a, welche vorzugsweise als Schmiedeteil-Baugruppe ausgebildet ist, ist vorzugsweise die Umschlingungsfläche, mit welcher die Endbereichs-Befestigungsanordnung 24a das ihr zugeordnete Tragrohr 20 umschlingt, vergrößert. Die vergrößerte Umschlingungsfläche kann konstruktiv dadurch erreicht sein, dass von der Endbereichs-Befestigungsanordnung 24a in Richtung der Tragrohrbaugruppen-Längsachse L, vorzugsweise in Richtung von dem der Endbereichs-Befestigungsanordnung 24a zugeordneten LKW-Rahmenträger 14 weg verlaufend eine Umschlingungshülse 25 vorgesehen ist.

Die Umschlingungshülse 25 ist vorzugsweise einstückig mit der Endbereichs-Befestigungsanordnung 24a ausgebildet, besonders bevorzugt angeschmiedet.

Zwischen der Umschlingungshülse 25 bzw. der Endbereichs-Befestigungsanordnung 24a und dem zugeordneten Tragrohr 20 kann ein an die Gestalt der Endbereichs-Befestigungsanordnung 24a angepasstes Ausgleichsteil 40a angeordnet sein.

Auch die Endbereichs-Befestigungsanordnung 24 kann durch vorzugsweise identische Bauteile 26a gebildet sein, von welchen jede vorzugsweise etwa eine Hälfte der Umschlingungshülse 25 aufweist.

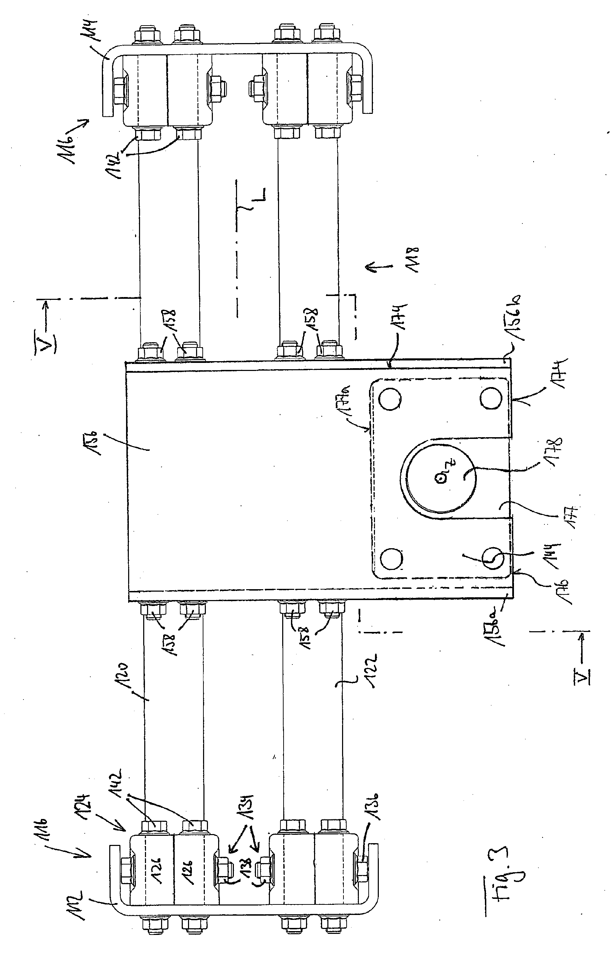

Nachfolgend wird die in den Figuren 3 bis 5 gezeigte zweite Ausführungsform einer erfindungsgemäßen LKW-Traverse beschrieben.

Gleiche bzw. funktionsgleiche Bauteile oder Bauteilabschnitte wie in den Figuren 1 und 2 sind mit den gleichen Bezugszeichen versehen, jedoch erhöht um die Zahl 100.

Die in den Figuren 3 bis 5 dargestellte zweite Ausführungsform wird nur in sofern beschrieben werden, als sie sich von der ersten Ausführungsform der Figuren 1 und 2 unterscheidet, auf deren Beschreibung ansonsten ausdrücklich verwiesen wird.

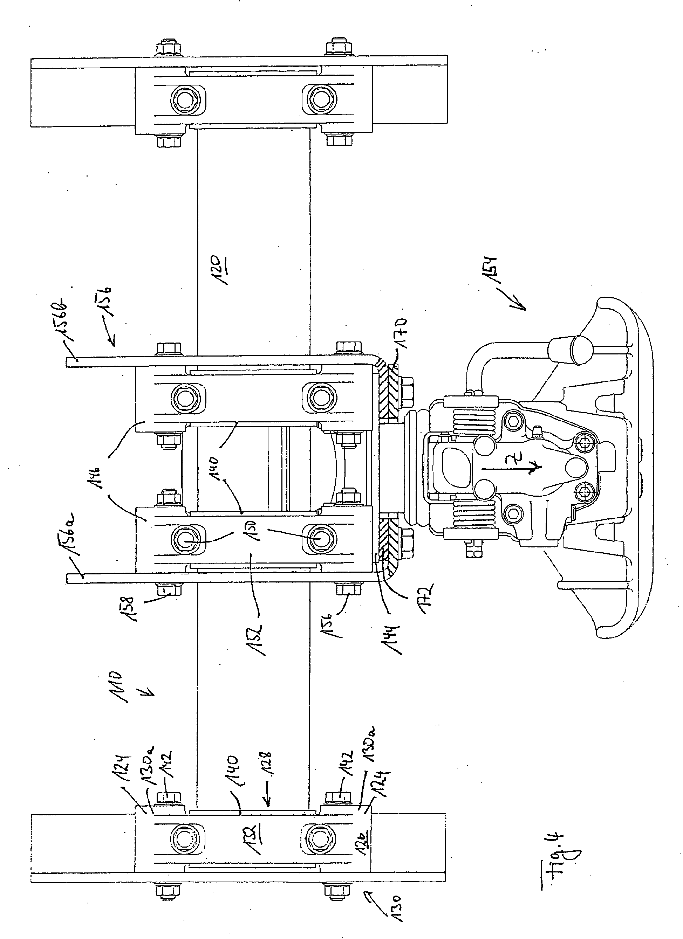

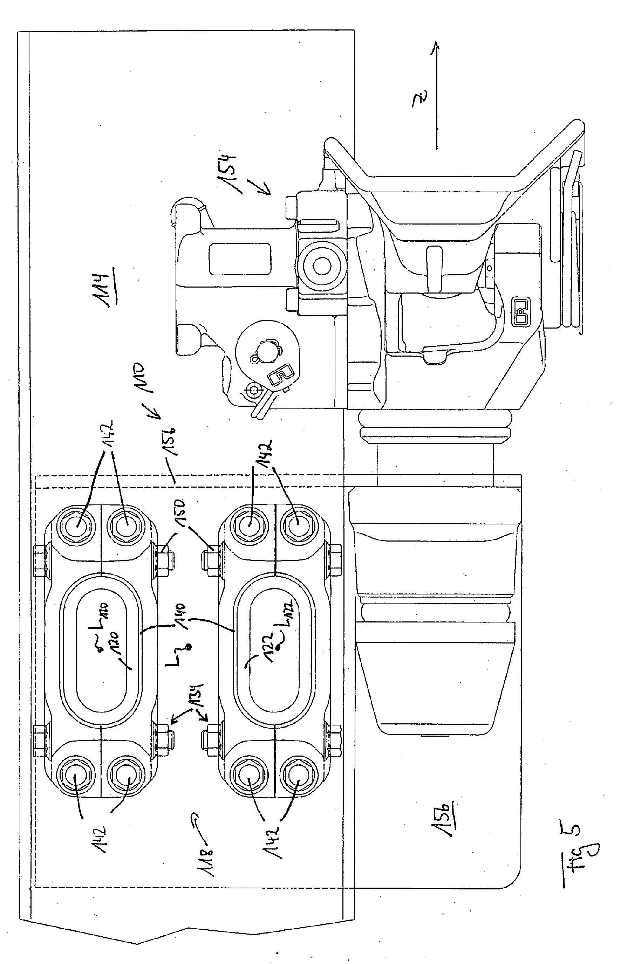

Wiederum sei darauf verwiesen, dass die Figuren 3, 4 und 5 jeweils einen unterschiedlichen Komplettierungsgrad der Anhängerkupplung zeigen. Figur 3 zeigt die bloße Anhängerkupplungsaufnahme 144, Figur 4 zeigt die vervollständigte Anhängerkupplung und Figur 5 zeigt die nahezu vollständige Anhängerkupplung unter Weglassung der Fixierung der Anhängerkupplung 154 in Kupplungs-Zugrichtung Z.

Während die Befestigung der Tragrohrbaugruppe 118 an den LKW-Rahmenlängsträgern 112 und 114 im Wesentlichen jener von Figur 2 entspricht, d.h. alle Endbereichs-Befestigungsanordnungen 124 sind durch Verschraubungen 142 mit dem LKW-Rahmen 116 verschraubt, ist die in Figur 3 mit strichliniertem Umriss dargestellte Anhängerkupplungsaufnahme an einer Trägerbaugruppe 156 ausgebildet, welche, wie in Figur 4 zu erkennen ist, mit Aufnahme-Befestigungsanordnungen 146 an die Tragrohre 120 und 122 durch Klemmeingriff in der zuvor beschriebenen Weise montiert ist.

Als konstruktive Variante ist die Trägerbaugruppe 156 von Figur 4 im Gegensatz zu jener von Figur 3 mehrteilig mit den Teilbauteilen 156a und 156b ausgebildet.

Die Aufnahme-Befestigungsanordnungen 146 sind zur weiteren Montageerleichterung sowie zur Reduzierung der für den Aufbau einer erfindungsgemäßen LKW-Traverse 110 benötigten Anzahl unterschiedlicher Bauteile mit den Endbereichs-Befestigungsanordnungen 124 vorzugsweise identisch.

Analog zur Verschraubung 124, mit welchen die Endbereichs-Befestigungsanordnungen 124 an den LKW-Längsrahmenträgern 112 bzw. 114 verbunden sind, sind die Aufnahme-Befestigungsanordnungen 146 mittels Verschraubungen 158 mit der Trägerbaugruppe 156 verbunden.

Aufgrund der Baugleichheit der Aufnahme-Befestigungsanordnungen 146 mit den Endbereichs-Befestigungsanordnungen 124 ist vorteilhafterweise auch zwischen den Aufnahme-Befestigungsanordnungen 146 und dem zugeordneten geklemmten Tragrohr, etwa Tragrohr 120, ein Ausgleichsteil 140 angeordnet.

In Figur 3 ist angedeutet, wie eine Anhängerkupplung 154 fertig montiert einfach mit der Trägerbaugruppe 156 verbunden werden kann. Hierzu weist das Teilbauteil 156a eine Längsausnehmung 170 auf und weist das vom Betrachter der Figur 3 aus gesehen hinter dem Teilbauteil 156a gelegene Teilbauteil 156b eine im Wesentlichen identische Längsausnehmung 172 auf.

Sowohl die Längsausnehmung 170 wie auch die Längsausnehmung 172 verlaufen mit einer wenigstens dem Durchmesser des in den Längsausnehmungen aufzunehmenden Befestigungslagerabschnitts entsprechenden lichten Weite orthogonal zur Richtung der Tragrohrbaugruppen-Längsachse L und orthogonal zur Zugrichtung Z, wobei jede der Längsausnehmungen 170 und 172 jeweils vom freien unteren Rand 174 bzw. 176 des zur Tragrohrbaugruppen-Längsachse L parallelen Schenkels des zugeordneten Teilbauteils 156a und 156b weg verlaufen.

Die Längsausnehmungen 170 und 172 weisen an ihrem dem freien Rand 174 bzw. 176 ihres zugeordneten Teilbauteils ferneren Längsende vorzugsweise eine halbkreisförmige Berandung auf.

In Blickrichtung eines Betrachters der Figur 3 hinter den zur Tragrohrbaugruppen-Längsachse L parallelen Schenkeln der Teilbauteile 156a und 156b kann eine Stützplatte 177 mit einer Ausnehmung 178 an die Trägerbaugruppe 156 montiert sein. Die Ausnehmung 178 umgibt einen Abschnitt des Befestigungslagers einer Anhängerkupplung.

Aufgrund der vorgesehenen Längsausnehmungen 170 und 172, welche ausgehend vom jeweils unteren freien Rand 174 bzw. 176 der zur Tragrohrbaugruppen-Längsachse L parallelen Schenkel des zugeordneten Teilbauteils 156a bzw. 156b weg in eine Richtung orthogonal sowohl zur Tragrohrbaugruppen-Längsachse L als auch zur Kupplungs-Zugrichtung Z verlaufen, kann eine fertig montierte Anhängerkupplung nachträglich an der Trägerbaugruppe 156 festgelegt werden, da die fertig montierte Anhängerkupplung einfach in Figur 3 von unten längs der Längsausnehmungen 170, 172 in die Tragrohrbaugruppe 156 eingeschoben und an eine bereits an einen LKW anmontierte Rohrtraverse 10 montiert werden kann.

In Figur 4 ist die Trägerbaugruppe 156 ohne Längsausnehmungen 170, 172 ausgebildet dargestellt. Eine Stützplatte ist daher entbehrlich.

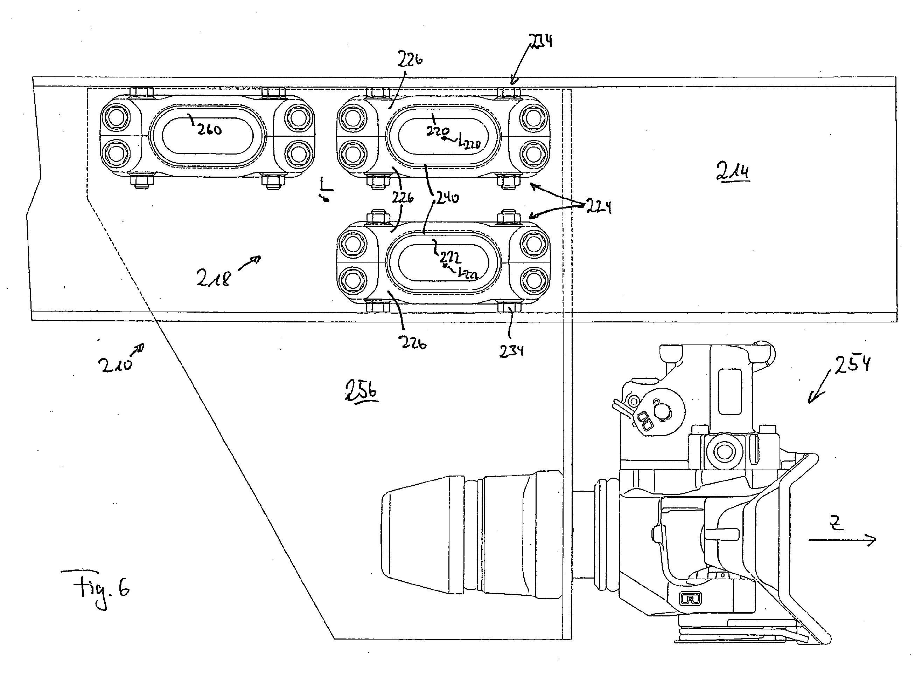

Im folgenden wird kurz auf die in Figur 6 dargestellte dritte Ausführungsform einer erfindungsgemäßen LKW-Rohrtraverse 210 eingegangen.

Gleiche bzw. funktionsgleiche Bauteile wie in der ersten und der zweiten Ausführungsform sind mit gleichen Bezugszeichen versehen, jedoch erhöht um die Zahl 200 bzw. 100.

Die dritte Ausführungsform wird nur in sofern beschrieben werden, als sie sich von den vorhergehenden Ausführungsformen unterscheidet, auf deren Beschreibung ansonsten ausdrücklich verwiesen wird.

Die Ansicht von Figur 6 entspricht hinsichtlich Blickrichtung und Schnittebene jener von Figur 5.

Die Trägerbaugruppen 156 bzw. 256 ermöglichen die Anordnung von Anhängerkupplungen 154 bzw. 254 als Unterbau-Anordnung, bei welcher die Anhängerkupplung 154 bzw. 254 mit Abstand von der Tragrohrbaugruppe 118 bzw. 218 angeordnet ist.

Dabei weist die Anhängerkupplung 254 der dritten Ausführungsform einen deutlich größeren Abstand von der Tragrohrbaugruppe 218 auf als die zweite Ausführungsform.

Aufgrund der dadurch im Zugbetrieb bedingten höheren Biege- bzw. Drehmomente, die auf die Tragrohrbaugruppe 218 wirken, umfasst diese zusätzlich zu den bereits diskutierten Tragrohren 220 und 222 ein drittes Tragrohr 260 auf.

Dieses dritte Tragrohr 260, welches auf der Höhe des Tragrohres 220 jedoch im oder entgegen der Kupplungs-Zugrichtung Z von diesem mit Abstand vorgesehen sein kann, ist in identischer Weise wie die beiden Zugrohre 220 und 222 sowohl mit den LKW-Längsrahmenträgern 212 und 214, wie auch mit der Trägerbaugruppe 256 verbunden.

Zur Erhöhung der Verbindungssteifigkeit oder/und der Biegesteifigkeit der Tragrohrbaugruppe kann diese auch noch weitere zusätzliche Tragrohre umfassen.

Dabei kann ein Teil der Tragrohre um 90° um seine Längsachse verdreht orientiert bezüglich der übrigen Tragrohre in der Tragrohrbaugruppe angeordnet sein.

In den Figuren 1 bis 6 sind unterschiedliche Einbausituationen einer Anhängerkupplung oder wenigstens einer Anhängerkupplungsaufnahme dargestellt, etwa ein so genannter "Halbunterbau" in Figur 1, ein zentraler Einbau in den Figuren 3 und 5 oder ein Unterbau in den Figuren 5 und 6.

Selbstverständlich können einzelne Aspekte die in den Figuren im Zusammenhang mit einer Einbauart dargestellt sind, auch an jeder anderen Einbauart derart realisiert sein, so dass die Einbauart keinerlei beschränkende Wirkung für die Gestaltung der Rohrtraverse hat.

## Patentansprüche

1. Lastkraftwagen-Anhängerkupplungsaufnahmetraverse umfassend eine sich längs einer Tragrohrbaugruppen-Längsachse (L) erstreckende Tragrohrbaugruppe (18; 118; 218) mit wenigstens zwei Tragrohren (20, 22; 120, 122; 220, 222, 260), wobei die Lastkraftwagen-Anhängerkupplungsaufnahmetraverse eine an der Tragrohrbaugruppe (18; 118; 218) vorgesehene Anhängerkupplungsaufnahme (44; 144) aufweist, welche dazu ausgebildet ist, eine Anhängerkupplung (54; 154; 254) mit einer zur Tragrohrbaugruppen-Längsachse (L) im Wesentlichen orthogonalen Kupplungs-Zugrichtung (Z) aufzunehmen, sowie ferner umfassend wenigstens eine Endbereichs-Befestigungsanordnung (24; 124; 224), welche einen ersten Befestigungsabschnitt (28; 128) zur Befestigung der Endbereichs-Befestigungsanordnung (24; 124; 224) an einem Längsendbereich der Tragrohrbaugruppe (18; 118; 218) und einen zweiten Befestigungsabschnitt (30; 130) zur Befestigung der Endbereichs-Befestigungsanordnung (24; 124; 224) an einem Rahmen (16) eines Lastkraftwagens aufweist,
**dadurch gekennzeichnet, dass** der erste Befestigungsabschnitt (28; 118) der Endbereichs-Befestigungsanordnung (24; 124; 224) zum Klemmeingriff mit der Tragrohrbaugruppe (18; 118; 218) ausgebildet ist, wobei die Anhängerkupplungsaufnahme (44; 144) eine Aufnahme-Befestigungsanordnung (46; 146) aufweist, welche mit einer Mehrzahl von Tragrohren (20, 22; 120, 122; 220, 222, 260), vorzugsweise mit allen Tragrohren (20, 22; 120, 122; 220, 222, 260) der LKW-Traverse (10; 110; 210) in Klemmeingriff ist oder in Klemmeingriff bringbar ist.

2. LKW-Anhängerkupplungsaufnahmetraverse (10; 110; 210) nach Anspruch 1,
**dadurch gekennzeichnet, dass**, bei Betrachtung der Endbereichs-Befestigungsanordnung (24; 124; 224) in einem an die Tragrohrbaugruppe (18; 118; 218) montierten Zustand, der erste Befestigungsabschnitt (28; 128) einen in Richtung der Tragrohrbaugruppen-Längsachse (L) verlaufenden Klemm-Abschnitt (32; 132) aufweist, welcher ein Tragrohr (20, 22; 120, 122; 220, 222, 260) in einer zu einer Tragrohr-Längsachse (L) orthogonalen Umfangsrichtung umgibt und in Klemmeingriff mit dem Tragrohr (20, 22; 120, 122; 220, 222, 260) ist.

3. LKW-Anhängerkupplungsaufnahmetraverse (10; 110; 210) nach Anspruch 2,
**dadurch gekennzeichnet, dass**, bei Betrachtung der Endbereichs-Befestigungsanordnung (24; 124; 224) in einem an die Tragrohrbaugruppe (18; 118; 218) montierten Zustand, zwischen einer zu dem umgebenen Tragrohr (20, 22; 120, 122; 220, 222, 260) weisenden Klemmfläche des ersten Befestigungsabschnitts (28; 128; 228) und einer Außenfläche des Tragrohrs (20, 22; 120, 122; 220, 222, 260) ein Ausgleichsteil (40; 140; 240), vorzugsweise ein Elastomer-Ausgleichsteil vorgesehen ist, welches besonders bevorzugt ringförmig ausgebildet ist und das Tragrohr (20, 22; 120, 122; 220, 222, 260) in einer zur Tragrohr-Längsachse (L) orthogonalen Umfangsrichtung umschließt.

4. LKW-Anhängerkupplungsaufnahmetraverse (10; 110; 210) nach einem der vorhergehenden Ansprüche,
**dadurch gekennzeichnet, dass** die Endbereichs-Befestigungsanordnung (24; 124; 224) mehrteilig ausgebildet ist, wobei insbesondere der Klemm-Abschnitt (32; 132) durch wenigstens zwei Endbereichs-Befestigungsanordnungsbauteile (26) gebildet ist.

5. LKW-Anhängerkupplungsaufnahmetraverse (10; 110; 210) nach einem der vorhergehenden Ansprüche,
**dadurch gekennzeichnet, dass**, bei Betrachtung der Endbereichs-Befestigungsanordnung (24; 124; 224) im an die Tragrohrbaugruppe (18; 118; 218) montierten Zustand, an der Endbereichs-Befestigungsanordnung (24; 124; 224) wenigstens ein Klemmkraftmittel (34; 134; 234) vorgesehen ist, welches auf die Endbereichs-Befestigungsanordnung (24; 124; 224) eine Klemmkraft mit einer zur Tragrohr-Längsachse (L) des umgebenen Tragrohres (20, 22; 120, 122; 220, 222, 260) orthogonalen Klemmkraftkomponente ausübt.

6. LKW-Anhängerkupplungsaufnahmetraverse (10; 110; 210) nach Anspruch 4 und 5,
**dadurch gekennzeichnet, dass** an der mehrteiligen Endbereichs-Befestigungsanordnung (24; 124; 224) wenigstens zwei Klemmkraftmittel (34; 134; 234) vorgesehen sind, wobei vorzugsweise eine Klemmfläche, über welche hinweg der Klemm-Abschnitt (32; 132) mit dem Tragrohr (20, 22; 120, 122; 220, 222, 260) in Klemmeingriff ist, zwischen den Wirklinien von je wenigstens einem Klemmkraftmittel (34; 134; 234) gelegen ist.

7. LKW-Anhängerkupplungsaufnahmetraverse (10; 110; 210) nach einem der vorhergehenden Ansprüche,
**dadurch gekennzeichnet, dass**, bei Betrachtung der Endbereichs-Befestigungsanordnung (24; 124; 224) im an die Tragrohrbaugruppe (18; 118; 218) montierten Zustand, der zweite Befestigungsabschnitt (30; 130) wenigstens eine, vorzugsweise in Richtung der Tragrohrbaugruppen-Längsachse (L) verlaufende, Durchgangsöffnung aufweist, welche durch einen Schraubenschaft oder eine Gewindestange oder dergleichen durchsetzbar oder durchsetzt ist.

8. LKW-Anhängerkupplungsaufnahmetraverse (10; 110; 210) nach einem der vorhergehenden Ansprüche,
**dadurch gekennzeichnet, dass** an jedem Längsendbereich eines Tragrohrs (20, 22; 120, 122; 220, 222, 260) der Tragrohrbaugruppe (18; 118; 218) eine Endbereichs-Befestigungsanordnung (24; 124; 224) vorgesehen ist.

9. LKW-Anhängerkupplungsaufnahmetraverse (10; 110; 210) nach einem der vorhergehenden Ansprüche,
**dadurch gekennzeichnet, dass** die Aufnahme-Befestigungsanordnung (46; 146) wenigstens zwei Klemmeingriffs-Abschnitte (52; 152) aufweist, von welchen jeder ein Tragrohr (20, 22; 120, 122; 220, 222, 260) zur Herstellung des Klemmeingriffs umgibt, wobei vorzugsweise wenigstens zwei Klemmeingriffs-Abschnitte (52; 152) unterschiedliche Tragrohre (20, 22; 120, 122; 220, 222, 260) umgeben.

10. LKW-Anhängerkupplungsaufnahmetraverse (10; 110; 210) nach Anspruch 9,
**dadurch gekennzeichnet, dass** wenigstens ein Klemmeingriffs-Abschnitt (52; 152), vorzugsweise mehrere Klemmeingriffs-Abschnitte (52; 152), besonders bevorzugt alle Klemmeingriffs-Abschnitte (52; 152), derart mehrteilig ausgebildet ist bzw. sind, dass eine zum Tragrohr (20, 22; 120, 122; 220, 222, 260) hinweisende, das Tragrohr (20, 22; 120, 122; 220, 222, 260) umgebende Klemmeingriffsfläche des Klemmeingriffs-Abschnitts (52; 152) von wenigstens zwei gesondert voneinander ausgebildeten Klemmeingriffs-Abschnittsbauteilen (48; 148) gebildet ist, von welchen vorzugsweise eines integral mit der Anhängerkupplungsaufnahme (44; 144) ausgebildet ist.

11. LKW-Anhängerkupplungsaufnahmetraverse (10; 110; 210) nach einem der vorhergehenden Ansprüche,
**dadurch gekennzeichnet, dass** an der Aufnahme-Befestigungsanordnung (46; 146) wenigstens ein Klemmeingriffskraftmittel (34; 134) vorgesehen ist, welches auf die Aufnahme-Befestigungsanordnung (46; 146) eine Klemmeingriffskraft mit einer zur Tragrohr-Längsachse (L20, L22; L120, L122; L220, L222, L266) des umgebenen Tragrohres (20, 22; 120, 122; 220, 222, 260) orthogonalen Klemmkraftkomponente ausübt, wobei vorzugsweise an dem wenigstens einen mehrteiligen Klemmeingriffs-Abschnitt (52; 152) wenigstens zwei Klemmeingriffskraftmittel (50; 150) vorgesehen sind, wobei weiter vorzugsweise die Klemmeingriffsfläche zwischen den Wirklinien von je wenigstens einem Klemmeingriffskraftmittel (50; 150) gelegen ist.

12. LKW-Anhängerkupplungsaufnahmetraverse (10; 110; 210) nach einem der vorhergehenden Ansprüche,
**dadurch gekennzeichnet, dass** die Anhängerkupplungsaufnahme (44; 144) einen Zugstangenlagerbock umfasst, welcher vorzugsweise zwischen zwei Tragrohren (20, 22; 120, 122; 220, 222, 260) der Tragrohrbaugruppe (18; 118; 218) angeordnet ist.

13. LKW-Anhängerkupplungsaufnahmetraverse (10; 110; 210) nach einem der vorhergehenden Ansprüche,
**dadurch gekennzeichnet, dass** an der Aufnahme-Befestigungsanordnung (46; 146) ein Anbringungsabschnitt vorgesehen ist, welcher zur Anbringung an eine die Anhängerkupplungsaufnahme (44; 144) tragende Trägerbaugruppe (56; 156; 256) ausgebildet ist, und hierzu wenigstens eine, vorzugsweise in Richtung der Tragrohrbaugruppen-Längsachse (L) verlaufende, Anbringungs-Durchgangsöffnung aufweist, welche durch einen Schraubenschaft oder eine Gewindestange oder dergleichen durchsetzbar oder durchsetzt ist.

14. LKW-Anhängerkupplungsaufnahmetraverse (10; 110; 210) nach einem der vorhergehenden Ansprüche,
**dadurch gekennzeichnet, dass** an der Anhängerkupplungsaufnahme (44; 144) eine im Wesentlichen vollständig montierte Anhängerkupplung (54; 154; 254) aufgenommen ist.

## Claims

1. Cross beam for receiving a lorry tow bar, comprising a support tube assembly (18; 118; 218) which extends along a support tube assembly longitudinal axis (L) and has at least two support tubes (20, 22; 120, 122; 220, 222, 260), the cross beam for receiving a lorry tow bar having a tow bar receptacle (44; 144) which is provided on the support tube assembly (18; 118; 218) and is designed to receive a tow bar (54; 154; 254) with a coupling direction of pull (Z) which is substantially orthogonal to the support tube assembly longitudinal axis (L), and further comprising at least one end-region fastening arrangement (24; 124; 224) which has a first fastening portion (28; 128) for fastening the end-region fastening arrangement (24; 124; 224) to a longitudinal end region of the support tube assembly (18; 118; 218) and a second fastening portion (30; 130) for fastening the end-region fastening arrangement (24; 124; 224) to a frame (16) of a lorry, **characterised in that** the first fastening portion (28; 128) of the end-region fastening arrangement (24; 124; 224) is designed to clampingly engage with the support tube assembly (18; 118; 218), the tow bar receptacle (44; 144) having a receptacle fastening arrangement (46; 146) which clampingly engages or can clampingly engage with a plurality of support tubes (20, 22; 120, 122; 220, 222, 260), preferably with all the support tubes (20, 22; 120, 122; 220, 222, 260) of the lorry cross beam (10; 110; 120).

2. Cross beam (10; 110; 210) for receiving a lorry tow bar according to claim 1, **characterised in that**, when the end-region fastening arrangement (24; 124; 224) is viewed mounted on the support tube assembly (18; 118; 218), the first fastening portion (28; 128) has a clamping portion (32; 132) which extends in the direction of the support tube assembly longitudinal axis (L), encloses a support tube (20, 22; 120, 122; 220, 222, 260) in a circumferential direction which is orthogonal to a support tube longitudinal axis (L) and clampingly engages with the support tube (20, 22; 120, 122; 220, 222, 260).

3. Cross beam (10; 110; 210) for receiving a lorry tow bar according to claim 2, **characterised in that**, when the end-region fastening arrangement (24; 124; 224) is viewed mounted on the support tube assembly (18; 118; 218), a compensation part (40; 140; 240), preferably an elastomer compensation part, is provided between a clamping surface of the first fastening portion (28; 128; 228), facing the enclosed support tube (20, 22; 120, 122; 220, 222, 260), and an outer surface of the support tube (20, 22; 120, 122; 220, 222, 260), which compensation part is most preferably annular in shape and surrounds the support tube (20, 22; 120, 122; 220, 222, 260) in a circumferential direction orthogonal to the support tube longitudinal axis (L).

4. Cross beam (10; 110; 210) for receiving a lorry tow bar according to any of the preceding claims, **characterised in that** the end-region fastening arrangement (24; 124; 224) is formed of several parts, in particular the clamping portion (32; 132) being formed by at least two component parts (26) of the end-region fastening arrangement.

5. Cross beam (10; 110; 210) for receiving a lorry tow bar according to any of the preceding claims, **characterised in that**, when the end-region fastening arrangement (24; 124; 224) is viewed mounted on the support tube assembly (18; 118; 218), at least one clamping-force means (34; 134; 234) is provided on the end-region fastening arrangement (24; 124; 224) and applies a clamping force to the end-region fastening arrangement (24; 124; 224) by means of a clamping-force component which is orthogonal to the support tube longitudinal axis (L) of the enclosed support tube (20, 22; 120, 122; 220, 222, 260).

6. Cross beam (10; 110; 210) for receiving a lorry tow bar according to claims 4 and 5, **characterised in that** at least two clamping-force means (34; 134; 234) are provided on the multi-part end-region fastening arrangement (24; 124; 224), a clamping surface, by means of which the clamping portion (32; 132) clampingly engages with the support tube (20, 22; 120, 122; 220, 222, 260), preferably being located between the lines of action of at least one clamping-force means (34; 134; 234) in each case.

7. Cross beam (10; 110; 210) for receiving a lorry tow bar according to any of the preceding claims, **characterised in that**, when the end-region fastening arrangement (24; 124; 224) is viewed mounted on the support tube assembly (18; 118; 218), the second fastening portion (30; 130) has at least one through opening which preferably extends in the direction of the support tube assembly longitudinal axis (L) and is or can be penetrated by a barrel of a bolt or a threaded rod or the like.

8. Cross beam (10; 110; 210) for receiving a lorry tow bar according to any of the preceding claims, **characterised in that** one end-region fastening arrangement (24; 124; 224) is provided at each longitudinal end region of a support tube (20, 22; 120, 122; 220, 222, 260) of the support tube assembly (18; 118; 218).

9. Cross beam (10; 110; 210) for receiving a lorry tow bar according to any of the preceding claims, **characterised in that** the receptacle fastening arrangement (46; 146) has at least two clamping-engagement portions (52; 152), each of which encloses a support tube (20, 22; 120, 122; 220, 222, 260) to produce the clamping engagement, at least two clamping-engagement portions (52; 152) preferably enclosing different support tubes (20, 22; 120, 122; 220, 222, 260).

10. Cross beam (10; 110; 210) for receiving a lorry tow bar according to claim 9, **characterised in that** at least one clamping-engagement portion (52; 152), preferably a plurality of clamping-engagement portions (52; 152), most preferably all the clamping-engagement portions (52; 152), is/are formed of several parts in such a way that a clamping-engagement surface, which faces the support tube (20, 22; 120, 122; 220, 222, 260) and encloses the support tube (20, 22; 120, 122; 220, 222, 260), of the clamping-engagement portion (52; 152) is formed of at least two component parts (48; 148) of the clamping-engagement portion, which component parts are formed separately from one another and one of which is preferably formed integrally with the tow bar receptacle (44; 144).

11. Cross beam (10; 110; 210) for receiving a lorry tow bar according to any of the preceding claims, **characterised in that** at least one clamping-engagement-force means (34; 134) is provided on the receptacle fastening arrangement (46; 146) and applies a clamping-engagement force to the receptacle fastening arrangement (46; 146) by means of a clamping-force component that is orthogonal to the support tube longitudinal axis (L20, L22; L120, L122; L220, L222, L260) of the enclosed support tube (20, 22; 120, 122; 220, 222, 260), at least two clamping-engagement-force means (50; 150) preferably being provided on the at least one multi-part clamping-engagement portion (52; 152), the clamping-engagement surface further preferably being located between the lines of action of at least one clamping-engagement-force means (50; 150) in each case.

12. Cross beam (10; 110; 210) for receiving a lorry tow bar according to any of the preceding claims, **characterised in that** the tow bar receptacle (44; 144) comprises a pull rod bearing bracket which is preferably arranged between two support tubes (20, 22; 120, 122; 220, 222, 260) of the support tube assembly (18; 118; 218).

13. Cross beam (10; 110; 210) for receiving a lorry tow bar according to any of the preceding claims, **characterised in that** an attachment portion is provided on the receptacle fastening arrangement (46; 146) which is designed for attachment to a supporting assembly (56; 156; 256) which supports the tow bar receptacle (44; 144) and for this purpose has at least one attachment through opening which preferably extends in the direction of the support tube assembly longitudinal axis (L) and is or can be penetrated by the barrel of a bolt or a threaded rod or the like.

14. Cross beam (10; 110; 210) for receiving a lorry tow bar according to any of the preceding claims, **characterised in that** a substantially completely mounted tow bar (54; 154; 254) is received on the tow bar receptacle (44; 144).

## Revendications

1. Traverse de montage d'attelage de remorque pour camions comprenant un module de tubes de support (18; 118; 218) s'étendant le long d'un axe longitudinal de module de tubes de support (L) avec au moins deux tubes de support (20, 22; 120, 122; 220, 222, 260), dans laquelle la traverse de montage d'attelage de remorque pour camions présente un logement d'attelage de remorque (44; 144) prévu sur le module de tubes de support (18; 118; 218), qui est conçu pour recevoir un attelage de remorque (54; 154; 254) avec une direction de traction de l'attelage (Z) essentiellement orthogonale à l'axe longitudinal du module de tubes de support (L), et comprenant en outre au moins un agencement de fixation de région d'extrémité (24; 124; 224), qui présente une première partie de fixation (28; 128) pour la fixation de l'agencement de fixation de région d'extrémité (24; 124; 224) sur une région d'extrémité longitudinale du module de tubes de support (18; 118; 218) et une deuxième partie de fixation (30; 130) pour la fixation de l'agencement de fixation de région d'extrémité (24; 124; 224) sur un châssis (16) d'un camion, **caractérisée en ce que** la première partie de fixation (28; 128) de l'agencement de fixation de région d'extrémité (24; 124; 224) est conçue en vue d'une liaison par serrage avec le module de tubes de support (18; 118; 218), dans laquelle le logement d'attelage de remorque (44; 144) présente un agencement de fixation de logement (46; 146), qui est ou peut être amené en liaison par serrage avec une multiplicité de tubes de support (20, 22; 120, 122; 220, 222, 260), de préférence avec tous les tubes de support (20, 22; 120, 122; 220, 222, 260) de la traverse pour camions (10; 110; 210).

2. Traverse de montage d'attelage de remorque pour camions (10; 110; 210) selon la revendication 1, **caractérisée en ce que**, lorsque l'on considère l'agencement de fixation de région d'extrémité (24; 124; 224) dans un état monté sur le module de tubes de support (18; 118; 218), la première partie de fixation (28; 128) présente une partie de serrage (32; 132) s'étendant dans la direction de l'axe longitudinal du module de tubes de support (L), qui entoure un tube de support (20, 22; 120, 122; 220, 222, 260) dans une direction périphérique orthogonale à un axe longitudinal de tube de support (L) et se trouve en liaison par serrage avec le tube de support (20, 22; 120, 122; 220, 222, 260).

3. Traverse de montage d'attelage de remorque pour camions (10; 110; 210) selon la revendication 2, **caractérisée en ce que**, lorsque l'on considère l'agencement de fixation de région d'extrémité (24; 124; 224) dans un état monté sur le module de tubes de support (18; 118; 218), il est prévu entre une face de serrage de la première partie de fixation (28; 128; 228) tournée vers le tube de support entouré (20, 22; 120, 122; 220, 222, 260) et une face extérieure du tube de support (20, 22; 120, 122; 220, 222, 260) une pièce d'équilibrage (40; 140; 240), de préférence une pièce d'équilibrage élastomère, qui est en particulier de préférence de forme annulaire et qui entoure le tube de support (20, 22; 120, 122; 220, 222, 260) dans une direction périphérique orthogonale à l'axe longitudinal de tube de support (L).

4. Traverse de montage d'attelage de remorque pour camions (10; 110; 210) selon l'une quelconque des revendications précédentes, **caractérisée en ce que** l'agencement de fixation de région d'extrémité (24; 124; 224) est réalisé en plusieurs parties, de telle manière que la partie de serrage (32; 132) soit formée par au moins deux éléments (26) de l'agencement de fixation de région d'extrémité.

5. Traverse de montage d'attelage de remorque pour camions (10; 110; 210) selon l'une quelconque des revendications précédentes, **caractérisée en ce que**, lorsque l'on considère l'agencement de fixation de région d'extrémité (24; 124; 224) dans l'état monté sur le module de tubes de support (18; 118; 218), il est prévu sur l'agencement de fixation de région d'extrémité (24; 124; 224), au moins un moyen de force de serrage (34; 134; 234), qui exerce sur l'agencement de fixation de région d'extrémité (24; 124; 224) une force de serrage avec une composante de force de serrage orthogonale à l'axe longitudinal de tube de support (L) du tube de support d'enveloppe (20, 22; 120, 122; 220, 222, 260).

6. Traverse de montage d'attelage de remorque pour camions (10; 110; 210) selon la revendication 4 et 5, **caractérisée en ce qu'**il est prévu sur l'agencement de fixation de région d'extrémité en plusieurs parties (24; 124; 224) au moins deux moyens de force de serrage (34; 134; 234), dans laquelle de préférence une face de serrage, par laquelle la partie de serrage (32; 132) est en liaison de serrage avec le tube de support (20, 22; 120, 122; 220, 222, 260), est située entre les lignes d'action respectivement d'au moins un moyen de force de serrage (34; 134; 234).

7. Traverse de montage d'attelage de remorque pour camions (10; 110; 210) selon l'une quelconque des revendications précédentes, **caractérisée en ce que**, lorsque l'on considère l'agencement de fixation de région d'extrémité (24; 124; 224) dans l'état monté sur le module de tubes de transport (18; 118; 218), la deuxième partie de fixation (30; 130) présente au moins une ouverture de passage s'étendant de préférence dans la direction de l'axe longitudinal du module de tubes de support (L), qui peut être ou est traversée par un arbre fileté ou une tige filetée ou analogue.

8. Traverse de montage d'attelage de remorque pour camions (10; 110; 210) selon l'une quelconque des revendications précédentes, **caractérisée en ce qu'**il est prévu sur chaque région d'extrémité longitudinale d'un tube de support (20, 22; 120, 122; 220, 222, 260) du module de tubes de support (18; 118; 218) un agencement de fixation de région d'extrémité (24; 124; 224).

9. Traverse de montage d'attelage de remorque pour camions (10; 110; 210) selon l'une quelconque des revendications précédentes, **caractérisée en ce que** l'agencement de fixation de logement (46; 146) présente au moins deux parties de liaison par serrage (52; 152), dont chacune entoure un tube de support (20, 22; 120, 122; 220, 222, 260) pour la réalisation de la liaison par serrage, dans laquelle de préférence au moins deux parties de liaison par serrage (52; 152) entourent des tubes de support différents (20, 22; 120, 122; 220, 222, 260).

10. Traverse de montage d'attelage de remorque pour camions (10; 110; 210) selon la revendication 9, **caractérisée en ce qu'**au moins une partie de liaison par serrage (52; 152), de préférence plusieurs parties de liaison par serrage (52; 152), de préférence encore toutes les parties de liaison par serrage (52; 152) est ou sont réalisée(s) en plusieurs parties, de telle manière qu'une face de liaison par serrage de la partie de liaison par serrage (52; 152), tournée vers le tube de support (20, 22; 120, 122; 220, 222, 260) et entourant le tube de support (20, 22; 120, 122; 220, 222, 260), soit formée par au moins deux éléments de partie de liaison par serrage (48; 148) réalisés séparément l'un de l'autre, dont de préférence un est réalisé de façon intégrée avec le logement d'attelage de remorque (44; 144).

11. Traverse de montage d'attelage de remorque pour camions (10; 110; 210) selon l'une quelconque des revendications précédentes, **caractérisée en ce qu'**il est prévu sur l'agencement de fixation de logement (46; 146) au moins un moyen de force de liaison par serrage (34; 134), qui exerce sur l'agencement de fixation de logement (46; 146) une force de liaison par serrage avec une composante de force de serrage orthogonale à l'axe longitudinal de tube de support (L20, L22; L120, L122; L220, L222, L260) du tube de support entouré (20, 22; 120, 122; 220, 222, 260), dans laquelle il est prévu de préférence sur ladite au moins une partie de liaison par serrage en plusieurs parties (52; 152) au moins deux moyens de force de liaison par serrage (50; 150), dans laquelle en plus la face de liaison par serrage est de préférence située entre les lignes d'action respectivement d'au moins un moyen de force de liaison par serrage (50; 150).

12. Traverse de montage d'attelage de remorque pour camions (10; 110; 210) selon l'une quelconque des revendications précédentes, **caractérisée en ce que** le logement d'attelage de remorque (44; 144) présente un support de palier de barre de traction, qui est disposé de préférence entre deux tubes de support (20, 22; 120, 122; 220, 222, 260) du module de tubes de support (18; 118; 218).

13. Traverse de montage d'attelage de remorque pour camions (10; 110; 210) selon l'une quelconque des revendications précédentes, **caractérisée en ce qu'**il est prévu sur l'agencement de fixation de logement (46; 146) une partie d'application, qui est conçue en vue d'être appliquée sur un module de support (56; 156; 256) portant le logement d'attelage de remorque (44; 144), et qui présente à cet effet une ouverture de passage d'application s'étendant de préférence dans la direction de l'axe longitudinal du module de tubes de support (L), qui peut être ou est traversée par un arbre fileté ou une tige filetée ou analogue.

14. Traverse de montage d'attelage de remorque pour camions (10; 110; 210) selon l'une quelconque des revendications précédentes, **caractérisée en ce qu'**un attelage de remorque (54; 154; 254) monté essentiellement complètement est installé sur le logement d'attelage de remorque (44; 144).
